# EUROPEAN PATENT SPECIFICATION

(11) **EP 0 884 545 B1**
(45) Date of publication and mention of the grant of the patent: **10.07.2002**
(21) Application number: 98202286.5
(22) Date of filing: 14.04.1994
(51) Int. Cl.: F27B 3/08, F27B 3/28, F27B 3/22, C21C 5/52, F27D 17/00

(54) **Electric ARC melting furnace**
Elektrolichtbogenofen
Four à arc électrique

(30) Priority: 30.09.1993 JP 24483993; 22.12.1993 JP 32415893
(43) Date of publication of application: 16.12.1998
(62) Divisional of application: 94912676.7
(73) Proprietor: ISHIKAWAJIMA-HARIMA JUKOGYO KABUSHIKI KAISHA, Chiyoda-ku Tokyo 100 (JP)
(72) Inventor: Ogushi, Masaki c/o Yokohama Eng. Center, Isogo-ku, Yokohama-shi, Kanagawa-ken (JP); Iura, Toru, Fujisawa-shi, Kanagawa 251 (JP); Takeuchi, Osamu, Mitaka-shi, Tokyo 181 (JP); Yoshida, Hironobu c/o Yokohama Eng. Center, Isogo-ku, Yokohama-shi, Kanagawa-ken (JP); Yamamura, Ikuo, Otakebashi-Koen Sky-Heights 1103, Tokyo 116 (JP)
(74) Representative: Jennings, Nigel Robin

(56) References cited:
- EP-A- 0 183 284
- EP-A- 0 257 450
- DE-A- 1 936 649
- US-A- 4 242 532

## Description

### TECHNICAL FIELD

The present invention relates to an electric arc melting furnace for melting scrap to reproduce refined steel.

### BACKGROUND ART

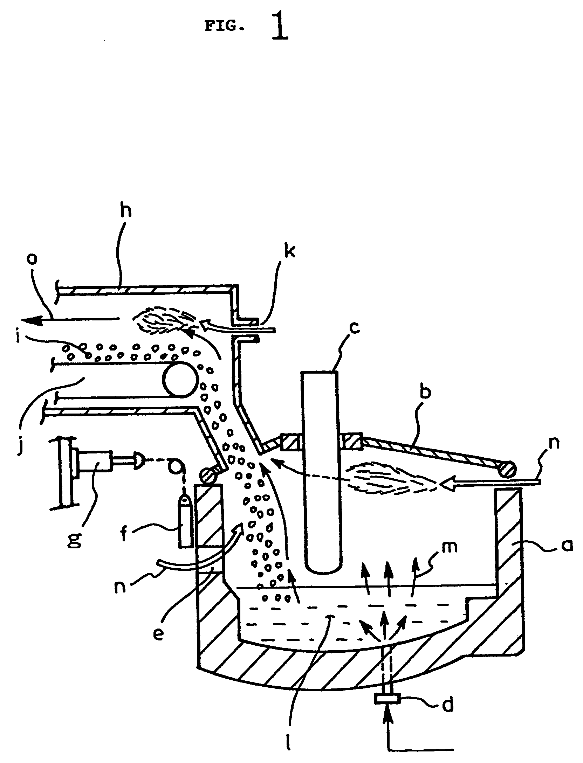

In a conventional electric arc melting furnace as shown in Fig. 1 in vertical section, a furnace shell a has a water-cooled roof b at a center of which an electrode c is vertically provided. The furnace shell a has at its bottom an oxygen blasting port d through which oxygen is blasted into the the shell a.

The furnace shell a has a spout e at its side. A spout door f outside of the spout e is vertically movable by a door cylinder g such that the spout e is closed and opened by downward and upward moment of the door f, respectively.

The roof b is provided with an exhaust gas duct h which accommodates a conveyer j to charge scrap i into the shell a and which has an air suction port k.

The scrap i is transported together with carboniferous material such as coke by the conveyer j, charged into the shell a and is heated and melted by heat of arc from the electrode c into molten steel l. The roof b serves to absorb radiant heat from a surface of the molten steel l.

The oxygen blasted through the port d reacts with the carbon to generate carbon monoxide m which is partially burned with air n intruding into the shell a through the spout e and other gaps. Generally, the quantity of the intruding air n is not sufficient to completely burn all of the carbon monoxide m and therefore about 30-60% of the carbon monoxide m remains unburned and enters into the exhaust duct h in which the carbon monoxide m is re-burned with air from the suction port k. Resultant reaction products to be discharged from the duct h as exhaust gases o preheat the scrap i and carboniferous material transported by the conveyer j into the shell a.

In the conventional electric arc melting furnace shown in Fig. 1 where the carbon monoxide m generated in the shell a is burned with the intruding air n, the quantity of the intruding air n is less as described above and the carbon monoxide m generated is partially burned so that temperature in the shell a is locally increased to generate local heat, disadvantageously resulting in failure of uniform heating of the molten steel l.

The intruding air n which is relied upon for combustion in the shell a is not controlled at all in relation with the quantity of carbon monoxide m generated in the shell a and the combustion in the shell is left to take its natural course. Therefore, such combustion of the carbon monoxide m cannot be employed for control of temperature in the shell a and, in fact, hardly contributes to any enhancement of thermal efficiency in the shell a depending upon conditions.

Flames are nonuniformly distributed in the shell a due to the partial combustion of the carbon monoxide by the intruding air n so that radiant heat from the surface of the molten steel l cannot be effectively absorbed by the water-cooled roof b, disadvantageously resulting in decrease of heat efficiency of the electric arc melting furnace.

The carbon monoxide m, which remains unburned in the shell a in the nonuniform combustion by the intruding air n, is introduced into the duct h with its concentration being left uneven. The introduced carbon monoxide with uneven concentration is non-uniformly or locally burned in the duct h, which may cause the scrap I in the duct h to be non-uniformly preheated or may lead to explosion in the duct h. Preheating temperature of the scrap I cannot be controlled at all.

In view of the above, the present invention has for its object to overcome the above and other defects encountered in the prior art and provide an electric arc melting furnace in which not only combustion temperature in a furnace shell but also preheating temperature in a scrap preheating device are controllable as desired, thereby positively ensuring a high degree of thermal efficiency and safety in furnace operation.

According to the present invention an electric arc melting furnace of the type comprising a shell, an electrode for melting scrap by heat produced by the electric arc and a scrap preheating device disposed above the furnace shell for preheating the scrap to be fed to the furnace shell by means of the exhaust gases leaving the furnace shell, characterised in that an induction fan for inducing the exhaust gases from the upper outlet of the scrap preheating device through exhaust piping and discharging the induced exhaust gases, a recirculation fan for blasting a proportion of the exhaust gases at the outlet side of the induction fan through exhaust supply piping, an exhaust gas blasting port, which is connected to the exhaust supply piping and is provided on the upper portion of the furnace shell and communicates with the upper space within the furnace shell, a flow control damper in the exhaust supply piping on the outlet side of the recirculation fan, a thermometer for detecting the temperature of the upper space in the said furnace shell and an upper space temperature controller for controlling the degree of opening of the flow control damper so as to maintain the temperature detected by the thermometer at a preset value.

According to a further aspect of the present invention, an electric arc melting furnace of the type referred to above is characterised in that an induction fan for inducing the exhaust gases from an upper outlet of the scrap preheating device through exhaust piping and discharging the induced exhaust gases, a recirculation fan for blasting a proportion of the exhaust gas at the outlet side of the induction fan through exhaust supply piping, an exhaust gas blasting port, which is connected to the exhaust supply piping and is provided on the lower inlet of the scrap preheating device and communicates with the interior thereof, a flow control damper in the exhaust supply piping on the outlet side of the recirculation fan, a thermometer for detecting the temperature of the lower inlet of the scrap preheating device, an inlet temperature controller for controlling the degree of opening of the flow control damper so as to maintain the temperature detected by the thermometer at a preset value, bypassing piping connecting the lower inlet of the scrap preheating device to the inlet side of the induction fan, a bypass damper in the bypass piping, a further thermometer for detecting the temperature of the upper outlet of the scrap preheating device and an outlet temperature controller for controlling the degree of opening of the bypass damper so as to maintain the temperature detected by the further thermometer at a preset vale.

Further features and details of the invention will be apparent from the following description of two specific embodiments which is given by way of example with reference to the accompanying drawings, in which:-
Fig. 1 is a vertical sectional view of a conventional electric arc melting furnace, whose construction was described above;
Fig. 2 is a vertical sectional view of one embodiment in accordance with the invention; and
Fig. 3 is a vertical sectional view of a second embodiment in accordance with the invention.

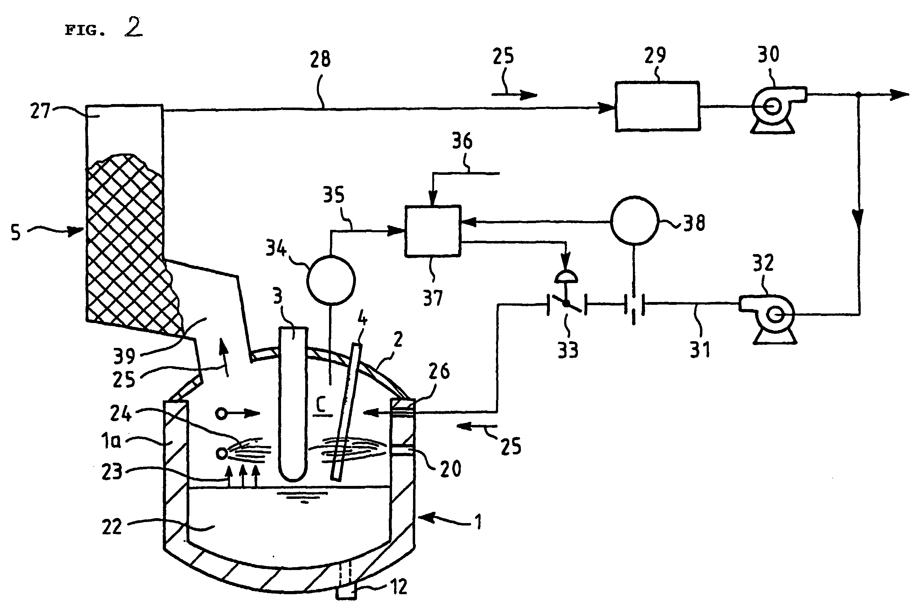

The furnace shown in Fig. 2 includes a furnace shell 1 with a peripheral wall 1a abd a water-cooled roof 2, extending vertically through the centre of which is an electrode 3. Provided at the bottom of the furnace shell 1 is an oxygen blasting port 12 for blasting oxygen into the shell. The roof 2 also has a carbon blasting port 4 and a scrap preheating device, both provided at positions remote from the centre of the roof 2. The carbon blasting port 4 charges carbonaceous material, such as coke, graphite or the like, into the shell 1.

In use, iron scrap passes through the preheating device 5 into the shell 1 where it is heated and melted by the arc from the electrode 3 to form molten steel 22. Air is blasted through an air blasting port 20 in the upper space C of the shell. Carbon in the blasted carbonaceous material and in the scrap reacts with the blasted oxygen to generate heat and carbon monoxide 23. The carbon monoxide burns to form flames 24. Exhaust gases 25 flow out in the scrap preheater 5.

A discharged gas blasting port 26 extends through an upper portion of the peripheral wall 1a of the furnace shell 1 and communicates with the interior of the shell 1. The scrap preheating device 5 has an upper outlet 27 which is connected through exhaust piping 28 and a gas cooler 29 to an induction fan 30.

The induction fan 30 is connected at its outlet side by exhaust gas supply piping 31 to the exhaust gas blasting port 26. A recirculation fan 32 is incorporated in the piping 31 to supply part of the exhaust gases 25 from the outlet side of the induction fan 30 into the upper space C in the furnace shell 1. A flow control damper 33 is disposed at outlet side of the fan 32.

A thermometer 34 is provided to detect the temperature in the upper space C of the furnace shell 1. The temperature 35 detected by the thermometer 34 and a preset temperature 36 are inputted into an upper space temperature controller 37 which is arranged to control the degree of opening of the damper 33 to maintain the temperature in the upper space C at the preset temperture 36. Reference numeral 38 denotes a flowmeter which detects the quantity of the recirculated exhaust gases in the piping 31.

The exhaust gases 25 from the upper outlet 27 of the scrap preheating device 5 are cooled by the gas cooler 29 and the induced by and discharged from the induction fan 30. The exhaust gases 25 at the outlet side of the induction fan 30 are partly recirculated into the upper space C in the shell 1 through the recirculation fan 32 and the exhaust gas supply piping 31. The temperature 35 detected by the thermometer 34 is inputted into the upper space temperature controller 37 into which the preset temperature 36 is also inputted. In response to the detected value from the flowmeter 38, the degree of opening of the flow control damper 33 is controlled to adjust the flow rate of the recirculated exhaust gases 25 so that the detected temperature 35 is maintained equal to the preset temperature 36 by the controller 37.

The above-mentioned recirculation of the cooled exhaust gases 25 into the upper space C makes it possible to maintain the temperature in the upper space C at the predetermined temperature 36. The discharged gases 25 fed to the upper space C interrupt the transmission of radiant heat from the molten steel 22 to the roof 2, thereby enhancing the thermal efficiency. Furthermore, the uniform dilution of the carbon monoxide 23 in the furnace shell 1 and the recirculation of the exhaust gases 25 with a low oxygen content prevent adverse problems such as oxidation, non-uniform combustion and explosion in the scrap preheating device 5.

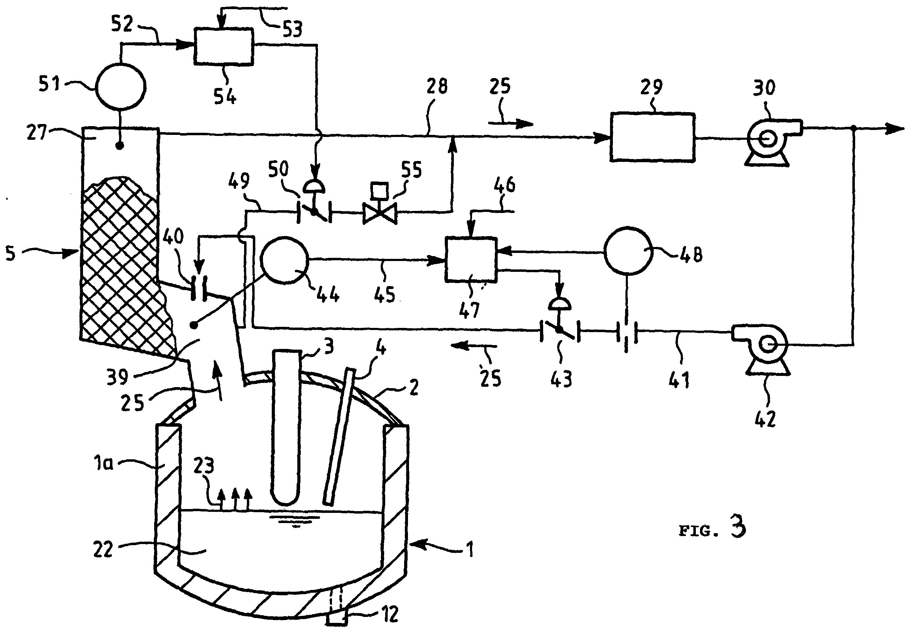

Fig. 3 illustrates a further embodiment of the invention in which parts same as those in Fig. 2 are denoted by the reference numerals.

The scrap preheating device 5 has an upper outlet 27 which is connected through exhaust piping 28 and a gas cooler 29 to an induction fan 30. The induction fan 30 is connected at its outlet side by exhaust gas supply piping 41 to an exhaust gas blasting port 40 in the inlet 39 of the scrap preheating device 5. A recirculation fan 42 is incorporated in the piping 41 to supply part of the exhaust gases 25 from the outlet side of the induction fan 30 to the inlet 39. A flow control damper 43 is disposed at outlet side of the fan 42.

A thermometer 44 is provided to detect the temperature in the inlet 39 of the scrap preheating device 5. An inlet temperature controller 47, into which the temperature 45 detected by the thermometer 44 and a preset temperature 46 are inputted, is arranged to control the degree of opening of the damper 43 to maintain the temperature in the lower inlet 39 at the preset temperature 46. Reference numeral 48 denotes a flowmeter which detects the quantity of the recirculated exhaust gases in the piping 41.

The inlet 39 of the preheating device 5 is connected to the exhaust piping 28 at the outlet side of the upper outlet 27 through bypassing piping 49 which has a bypass damper 50. A thermometer 51 is provided to detect the temperature at the upper outlet 27 of the scrap preheating device 5. An outlet tempertature controller 54, into which the temperature 52 detected by the thermometer 51 and a preset temperature 53 are inputted, is arranged to control the degree of opening of the bypass damper 50 to maintain the temperature in the upper outlet 27 at the preset temperature 53. Reference numeral 55 notes a switch damper disposed in the bypass piping 41.

The exhaust gases 25 from the upper outlet 27 of the preheating device 5 are cooled by the gas cooler 29 and then induced by and discharged from the induction fan 30. The exhaust gases 25 from the outlet side of the induction fan 30 are partly recirculated into the lower inlet 39 of the preheating device 5 through the recirculation fan 42 and the exhaust gas supply piping 41. The temperature 45 detected by the thermometer 44 is inputted into the inlet temperature controller 47 into which the preset temperature 46 is also inputted. In response to the detected value from the flowmeter 48, the degree of opening of the flow control damper 43 is controlled to adjust the flow rate of the recirculated exhaust gases 25 so that the detected temperature 45 of the thermometer 44 may be maintained equal to the preset temperature 46 by the controller 47.

The above-mentioned recirculation of the cooled exhaust gases 25 to the lower inlet 39 makes it possible to maintain the temperature in the lower inlet 39 at the predetermined temperature. Furthermore, the discharged gases 25 with a low oxygen content uniformly dilute the carbon monoxide 23 in the lower inlet 39. This results in the prevention of problems such as oxidation, non-uniform combustion and explosion in the scrap preheating device 5.

The exhaust gases 25 in the lower inlet 39 of the preheating device 5 are bypassed through the bypass piping 49 and the bypass damper 50 to the downstream side of the upper outlet 27. The detected temperature 52 from the thermometer 51 is inputted into the outlet temperature controller 54. The degree of opening of the bypass damper 50 is controlled to adjust the bypassed flow rate of the exhuast gases 25.

The exhaust gases 25 partly bypassed through the bypass piping 49 to the downstream side of the upper outlet 27 contribute to controlling the temperature of the upper outlet 27 to a predetermined temperature, which also prevents white smoke and noxious compounds (dioxin) from being generated. Furthermore, the exhaust gases 25 may be bypassed in an excess volume for preheating of the scrap, which contributes to reducing the pressure loss in the scrap preheating device 5 and reducing the size of the induction fan 30. In the event of problems such as clogging of the scrap preheating device 5, the exhaust gases 25 may be vented to the bypass pipe 39 which can therefore also serve as a safety system.

## Claims

1. An electric arc melting furnace comprising a shell (1), an electrode (3) for melting scrap by heat produced by the electric arc and a scrap preheating device (5) disposed above the furnace shell (1) for preheating the scrap to be fed to the furnace shell (1) by means of the exhaust gases (25) leaving the furnace shell, **characterised by** an induction fan (30) for inducing the exhaust gases from an upper outlet (27) of the scrap preheating device (5) through exhaust piping (28) and discharging the induced exhaust gases, a recirculation fan (32) for blasting a proportion of the exhaust gases at the outlet side of the induction fan (30) through exhaust supply piping (31), an exhaust gas blasting port (26), which is connected to the exhaust supply piping (31) and is provided on the upper portion of the furnace shell and communicates with the upper space within the furnace shell, a flow control damper (33) in the exhaust supply piping (31) on the outlet side of the recirculation fan (32), a thermometer (34) for detecting the temperature of the upper space in the said furnace shell (1) and an upper-space temperature controller (37) for controlling the degree of opening of the flow control damper (33) so as to maintain the temperature detected by the thermometer (34) at a preset value.

2. An electric arc melting furnace comprising a shell (1), an electrode (3) for melting scrap by heat produced by the electric arc and a scrap preheating device (5) disposed above the furnace shell (1) for preheating the scrap to be fed to the furnace shell (1) by means of the exhaust gases (25) leaving the furnace shell, **characterised by** an induction fan (30) for inducing the exhaust gases from an upper outlet (27) of the scrap preheating device (5) through exhaust piping (28) and discharging the induced exhaust gases, a recirculation fan (42) for blasting a proportion of the exhaust gas at the outlet side of the induction fan (30) through exhaust supply piping (41), an exhaust gas blasting port (40), which is connected to the exhaust supply piping (41) and is provided on the lower inlet (39) of the scrap preheating device (5) and communicates with the interior thereof, a flow control damper (43) in the exhaust supply piping (41) on the outlet side of the recirculation fan (42), a thermometer (44) for detecting the temperature of the lower inlet (39) of the scrap preheating device (5), an inlet temperature controller (47) for controlling the degree of opening of the flow control damper (43) so as to maintain the temperature detected by the thermometer (44) at a preset value, bypass piping (49) connecting the lower inlet of the scrap preheating device (5) to the inlet side of the induction fan (30), a bypass damper (50) in the bypass piping (49), a further thermometer (51) for detecting the temperature of the upper outlet (27) of the scrap preheating device (5) and an outlet temperature controller (54) for controlling the degree of opening of the bypass damper (50) so as to maintain the temperature detected by the further thermometer (51) at a preset value.

## Patentansprüche

1. Elektrolichtbogen-Ofen mit einer Schale (1), einer Elektrode (3) zum Schmelzen von Schrott durch die von dem elektrischen Lichtbogen erzeugte Hitze und einer Schrottvorheizeinrichtung (5), die oberhalb der Ofenschale (1) zum Vorheizen des in die Ofenschale (1) zu führenden Schrottes mit Hilfe der die Ofenschale verlassenden Abgase (25) liegt,
**dadurch gekennzeichnet,**
**daß** vorgesehen sind ein Induktionsgebläse (30) zum Einleiten der Abgase aus dem oberen Auslaß (27) der Schrottvorheizeinrichtung (5) durch eine Abgasleitung (28) und zur Abgabe des eingeleiteten Abgases, ein Umluftgebläse (32) zum Blasen eines Teils des Abgases an der Auslaßseite des Induktionsgebläses (30) durch eine Abgaszuführungsleitung (31), eine Abgasblasöffnung (26), die mit der Abgaszuführungsleitung (31) verbunden und am oberen Abschnitt der Ofenschale vorgesehen ist und in Verbindung mit dem oberen Raum in der Ofenschale steht, ein Strömungssteuerungsdämpfer (33) in der Abgaszuführungsleitung (31) auf der Auslaßseite des Umluftgebläses (32), ein Thermometer (34)zum Detektieren der Temperatur des oberen Raumes in der Ofenschale (1) und eine die Temperatur des oberen Raumes steuernde Einrichtung (37) zum Steuern des Öffnungsgrades des Strömungssteuerungsdämpfers, um die durch das Thermometer (34) detektierte Temperatur auf einem vorgegebenen Wert zu halten.

2. Elektrolichtbogen-Ofen mit einer Schale (1), einer Elektrode (3) zum Schmelzen von Schrott durch die von dem elektrischen Lichtbogen erzeugte Hitze und einer Schrottvorheizeinrichtung (5), die oberhalb der Ofenschale (1) zum Vorheizen des in die Ofenschale (1) zu führenden Schrottes mit Hilfe der die Ofenschale verlassenden Abgase (25) liegt,
**dadurch gekennzeichnet,**
**daß** vorgesehen sind ein Induktionsgebläse (30) zum Einleiten der Abgase aus dem oberen Auslaß (27) der Schrottvorheizeinrichtung (5) durch die Abgasleitung (28) und zur Abgabe der eingeleiteten Abgase, ferner ein Umluftgebläse (42) zum Blasen eines Teils des Abgases an der Auslaßseite des Induktionsgebläses (30) durch die Abgaszuführungsleitung (41), eine Abgasblasöffnung (40), die mit der Abgaszuführungsleitung (41) verbunden und am unteren Einlaß (39)der Schrottvorheizeinrichtung (5) vorgesehen ist und mit ihrem Inneren in Verbindung steht, ein Strömungssteuerungsdämpfer (43) in der Abgaszuführungsleitung (41) auf der Auslaßseite des Umluftgebläses (42), ein Thermometer (44) zum Detektieren der Temperatur des unteren Einlasses (39) der Schrottvorheizeinrichtung (5), eine die Einlaßtemperatur steuernde Einrichtung (47) zum Steuern des Öffnungsgrades des Strömungssteuerungsdämpfers (43), um die durch das Thermometer (44) detektierte Temperatur auf einem vorgegebenen Wert zu halten, eine Beipaßleitung (49), die den unteren Einlaß der Schrottvorheizeinrichtung (5) mit der Einlaßseite des Induktionsgebläses (30) verbindet, ein Beipaßdämpfer (50) in der Beipaßleitung (49), ein weiteres Thermometer (51) zum Detektieren der Temperatur des oberen Auslasses (27) der Schrottvorheizeinrichtung (5) und eine die Auslaßtemperatur steuernde Einrichtung (54) zum Steuern des Öffnungsgrades des Beipaßdämpfers (50), um die durch das weitere Thermometer (51) detektierte Temperatur auf einem vorgegebenen Wert zu halten.

## Revendications

1. Four de fusion à arc électrique comprenant une enveloppe (1), une électrode (3) destinée à fondre des riblons par la chaleur produite par l'arc électrique et un dispositif de préchauffage de riblon (5) disposé au-dessus de l'enveloppe de four (1) destiné à préchauffer les riblons devant être alimentés vers l'enveloppe de four (1) au moyen des gaz d'échappement (25) quittant l'enveloppe de four, **caractérisé par** un ventilateur d'aspiration (30) destiné à aspirer les gaz d'échappement depuis une sortie supérieure (27) du dispositif de préchauffage de riblon (5) au travers d'une canalisation d'échappement (28) et à refouler les gaz d'échappement aspirés, un ventilateur de recirculation (32) destiné à souffler une proportion des gaz d'échappement au niveau du côté de sortie du ventilateur d'aspiration (30) au travers d'une canalisation d'alimentation en échappement (31), un orifice de soufflage de gaz d'échappement (26), qui est raccordé à la canalisation d'alimentation en échappement (31) et est disposé sur la partie supérieure de l'enveloppe de four et communique avec l'espace supérieur à l'intérieur de l'enveloppe de four, un registre de commande de débit (33) dans la canalisation d'alimentation en échappement (31) du côté de sortie du ventilateur de recirculation (32), un thermomètre (34) destiné à détecter la température de l'espace supérieur dans ladite enveloppe de four (1) et un contrôleur de température d'espace supérieur (37) destiné à commander le degré d'ouverture du registre de commande de débit (33) de façon à maintenir la température détectée par le thermomètre (34) à une valeur préétablie.

2. Four de fusion à arc électrique comprenant une enveloppe (1), une électrode (3) destinée à fondre des riblons grâce à la chaleur produite par l'arc électrique et un dispositif de préchauffage de riblon (5) disposé au-dessus de l'enveloppe de four (1) destiné à préchauffer les riblons devant être alimentés vers l'enveloppe de four (1) au moyen des gaz d'échappement (25) quittant l'enveloppe de four, **caractérisé par** un ventilateur d'aspiration (30) destiné à aspirer les gaz d'échappement depuis une sortie supérieure (27) du dispositif de préchauffage de riblon (5) au travers d'une canalisation d'échappement (28) et à refouler les gaz d'échappement aspirés, un ventilateur de recirculation (42) destiné à souffler une proportion du gaz d'échappement au niveau du côté de sortie du ventilateur d'aspiration (30) au travers d'une canalisation d'alimentation en échappement (41), un orifice de soufflage de gaz d'échappement (40), qui est raccordé à la canalisation d'alimentation en échappement (41) et est disposé sur l'entrée inférieure (39) du dispositif de préchauffage de riblon (5) et communique avec l'intérieur de celui-ci, un registre de commande de débit (43) dans la canalisation d'alimentation en échappement (41) du côté de sortie du ventilateur de recirculation (42), un thermomètre (44) destiné à détecter la température de l'entrée inférieure (39) du dispositif de préchauffage de riblon (5), un contrôleur de température d'entrée (47) destiné à commander le degré d'ouverture du registre de commande de débit (43) de façon à maintenir la température détectée par le thermomètre (44) à une valeur préétablie, une canalisation de dérivation (49) reliant l'entrée inférieure du dispositif de préchauffage de riblon (5) au côté d'entrée du ventilateur d'aspiration (30), un registre de dérivation (50) dans la canalisation de dérivation (49), un autre thermomètre (51) destiné à détecter la température de la sortie supérieure (27) du dispositif de préchauffage de riblon (5) et un contrôleur de température de sortie (54) destiné à commander le degré d'ouverture du registre de dérivation (50) de façon à maintenir la température détectée par l'autre thermomètre (51) à une valeur préétablie.
